Europäisches Patentamt

European Patent Office

Office européen des brevets

(11) Veröffentlichungsnummer: **0 243 576 B1**

(12) **EUROPÄISCHE PATENTSCHRIFT**

(45) Veröffentlichungstag der Patentschrift: **10.06.92**

(51) Int. Cl.⁵: **C08K 3/04**, C09K 21/14

(21) Anmeldenummer: **87100645.8**

(22) Anmeldetag: **19.01.87**

(54) **Intumeszierende Polysiloxan-Formmassen.**

(30) Priorität: **31.01.86 DE 3602888**

(43) Veröffentlichungstag der Anmeldung:
**04.11.87 Patentblatt 87/45**

(45) Bekanntmachung des Hinweises auf die
Patenterteilung:
**10.06.92 Patentblatt 92/24**

(84) Benannte Vertragsstaaten:
**AT BE CH DE FR GB LI NL SE**

(56) Entgegenhaltungen:
**EP-A- 0 040 750**
**GB-A- 2 168 706**
**US-A- 3 574 644**

**Kirk-Othmer "Encyclopedia of chemical technology", 3. ed., John Wiley + Sons, vol 18 (p. 140-141); vol 10 (p. 398-409);**

**R. Gächter "Taschenbuch der Kunststoff-Additive", 2. ed, C. Hanser Verlag, 1979, p. 520-521;**

**"Encyclopedia of Polymer Science and Technology", John Wiley + Sons, 1969, vol. 10, p. 236-237;**

(73) Patentinhaber: **BAYER AG**

**W-5090 Leverkusen 1 Bayerwerk(DE)**

(72) Erfinder: **von Bonin, Wulf, Dr.**
**Mendelssohnstrasse 30**
**W-5090 Leverkusen(DE)**
Erfinder: **Sattlegger, Hans, Dr.**
**Auf dem Heidchen 9**
**W-5068 Odenthal(DE)**
Erfinder: **Ebneth, Harold, Dr.**
**Berta-von-Suttner-Strasse 61**
**W-5090 Leverkusen 1(DE)**

**Beschreibung**

Gegenstand der vorliegenden Erfindung sind intumeszierende Polysiloxan-Formmassen auf Basis an sich bekannter Polysiloxanmassen , die blähfähige Graphitverbindungen und Ethylendiaminphosphate enthalten.

Polysiloxan-Formmassen, seien es unvernetzte oder vernetzte, massive oder geschäumte bzw. aufschäumende Mehrkomponenten- oder Einkomponentensysteme, sind seit langem zur Herstellung von Verfüllungen oder Formkörpern, insbesondere aber für Zwecke der Verfugung von Bauteilen u. a. bekannt (vgl. z. B. GB-PS 10 64 930, FR-PS 14 39 025, DAS 11 67 020, US-PS 3,035,016, FR-PS 11 98 749, US-PS 3,296,161, US-PS 3,189,576, US-PS 3,896,079, US-PS 2,843,555, DAS 11 18 454, FR-PS 12 66 528, US-PS 3,161,614, DE-PS 12 47 646, DE-PS 12 58 087, DE-OS 25 48 510).

Man schätzt ihre gute Haftung an mineralischem Material und ihre gute Flexibilität und Elastizität in weiten Temperaturbereichen.

Da die bisherigen Formulierungen mit üblichen intumeszierenden Zusätzen nicht befriedigend zum Aufschäumen bei Beflammung (Intumeszenz) unter gleichzeitiger Unterdrückung des unerwünschten Brandverhaltens benutzt werden konnten, besteht der Wunsch nach für Zwecke des Brandschutzes einsetzbaren intumeszierenden Polysiloxan-Formmassen unvermindert fort.

Gegenstand der vorliegenden Erfindung sind Polysiloxan-Formmassen, die durch einen Gehalt an blähfähigen Graphitverbindungen und Ethylendiaminphosphaten gekennzeichnet sind.

Es wurde nun gefunden, daß Polysiloxan-Formmassen, selbst dann wenn sie im Anwendungsfalle hoch vernetzt sind, noch zu sehr gutem Aufblähen bei Beflammung gebracht werden können, wenn man ihnen blähfähige Graphitverbindungen zusetzt, d. h. körnige Graphitverbindungen, die bei Beaufschlagung mit Temperaturen über ca. 100 °C sich zu einem Mehrfachen ihres Ausgangsvolumens aufblähen.

Derartige Graphitverbindungen, in denen die Zwischengitterebenen des Graphits die Blähfähigkeit vermittelnde Einlagerungen enthalten, sind seit langem bekannt und werden auch für Zwecke des Brandschutzes eingesetzt. Man kann sie z. B. erhalten durch Oxidieren, Nitrosieren, Sulphidieren, Phosphatieren, Hydrieren und Halogenieren von verschiedenen Graphittypen und -körnungen, wobei sich Blähgraphite auf Basis nitrosierter Graphite als besonders geeignet erwiesen haben.

Überraschenderweise sind übliche Intumeszenzmittel, wie z. B. Kombinationen aus Ammonphosphaten, Kohlehydraten und Aminoplasten, zur Erzeugung von Intumeszenzen in Polysiloxan-Formmassen der technisch üblichen Formulierungen nahezu ungeeignet. Während selbst hochvernetzte Silicon-Formmassen durch Zusätze von Blähgraphit und Ethylendiaminphosphat hervorragend intumeszent eingestellt werden können.

Es wurde weiterhin festgestellt, daß die Zusätze von Blähgraphit und Ethylendiaminphosphat, obgleich sie aus chemischer Sicht keine flammhemmenden Eigenschaften haben sollten, die Brennbarkeit der damit ausgerüsteten Polysiloxan-Formmassen merkbar reduzieren.

Es wurde ferner festgestellt, daß diese Brennbarkeit dann offenbar synergistisch vermindert wird, wenn man Zusätze von-Blähgraphit mit Zusätzen von Ethylendiaminphosphat bzw. -polyphosphat kombiniert.

So hat ein Zusatz von ca. 20 Gew.-% eines Ammonium(poly)-phosphats bzw. Blähgraphit in vergleichbarer Menge relativ geringe Wirkung auf das Nachbrennen einer einmal entzündeten Silicon-Formmasse, während eine Kombination von 20 Gew.-% Ethylendiaminphosphat mit 20 Gew.-% nitrosiertem Blähgraphit ein Nachbrennen überraschenderweise verhindert.

Als Polysiloxan-Formmassen werden vor der eventuellen Vernetzung verformbare bzw. nach der eventuellen Vernetzung formstabile, vorzugsweise flexible Polysiloxanharze bzw. -kautschuke und vergleichbare Produkte auf Siliconbasis verstanden. Vorzugsweise handelt es sich um Alkyl- insbesondere Methylpolysiloxane der technisch bekannten Art, wie sie, modifiziert durch Reaktivgruppen, z.B. Silanol-, SiH- oder Vinylsilangruppen, in Form von unvernetzten bzw. vernetzten Siliconkautschuken, von Mehrkomponentensystemen, insbesondere mit Bestandteilen der Atmosphäre, z. B. Wasserdampf, vernetzenden Einkomponentenmassen bzw. Formmassen, seit längerem im Einsatz sind und dem Fachmann beispielsweise unter den Bezeichnungen Aminsystem, Oximsystem, Acetatsystem oder Benzamidsystem wohlbekannt sind. Es können aber auch Aryl- bzw. Alkylsilicontypen oder auch Kieselsäureestergruppen enthaltende Typen in Betracht gezogen werden. Von Interesse sind weiterhin bekannte Ein- oder Mehrkomponentensysteme auf Siliconbasis, die unter gleichzeitiger Vernetzung und Expansion von Treibgasen, z. B. $CO_2$, $N_2$, Luft oder Wasserstoff zu Schaumstoffen abreagieren.

Als blähfähige Graphitverbindungen werden solche Graphittypen verstanden, die bei Erwärmen auf Temperaturen über 100 °C expandieren. Hierzu gehören z. B. oxidierte, halogenierte und auch nitrosierte Graphite, die zu den sog. Graphitverbindungen zählen, wie sie z. B. im Römpps Chemie Lexikon (8. Auflage) oder US-PS 35 74 644 aufgeführt werden. Es handelt sich um Graphite, deren Zwischengitterschichten Fremdgruppen eingelagert enthalten, die die thermische Expansion bewirken. Bevorzugt werden nitrosierte Graphite wegen deren guter Zugänglichkeit verwendet, deren Korngröße oberhalb 0,25 mm (durchschnittlicher Maximaldurchmesser) liegt. Gegebenenfalls können zusätzlich zu blähfähigen Graphitverbindungen weitere Blähmittel eingesetzt werden, insbesondere solche, die Stickstoff abspalten, wie Azodicarbonamid, Benzolsulfonsäurehydrazid, p-Toluolsulfohydrazid, Diphenyloxid-4,4'-disulfohydrazid, Benzol-1,3-disulfohydrazid und/oder N,N'-Dinitrosopentamethylentetramin.

Die Polysiloxan-Formmassen, die erfindungsgemäß die Graphitverbindungen und Ethylendiaminphosphat enthalten sollen, enthalten die Graphitverbindungen bezogen auf das Gesamtgewicht in Mengen von 0,1 bis 50, vorzugsweise 3 bis 30 Gew.-%. Daneben können auch noch die üblichen sonstigen in Siliconmassen verwendeten Füllstoffe wie Ruß, Graphit, Kieselsäure, Metalle wie z. B. Pb, Fe, Al, Ag, Cu, Pt, Zn und deren Oxide oder Kreiden, Dolomit, Ferrite, Kaoline, Flußspat, Gesteinsmehle, Al-Hydroxide, Polymerfüllstoffe wie z. B. Teflon® und Farbpigmente oder Fasern enthalten sein.

Hinsichtlich Ethylendiaminphosphat wurde besonders gute Wirksamkeit beim Ethylendiaminphosphat (neutral) festgestellt.

Die Phosphate werden in Mengen von 3 bis 50, vorzugsweise 10 bis 40 Gew.-% (bezogen auf Gesamtgewicht) eingesetzt. Neben den salzartigen Ethylendiaminphosphaten können auch flüssige, z. T. als Weichmacher wirksame Phosphate mitverwendet werden, z. B. Ester, etwa die Methyl- oder Ethylester der Methylphosphonsäure oder auch die als Weichmacher bekannten Phosphorsäureester, z. B. Diphenylkresylphosphat. Diese werden in Mengen von 0,5 bis 25, vorzugsweise 3 bis 10 Gew.-% (bezogen auf Gesamtmasse) mitverwendet. Diese Zusätze verbessern die Konsistenz der Siliconmassen in Richtung auf verbesserte Verarbeitbarkeit durch Düsenaustragsgeräte.

Die Herstellung der erfindungsgemäßen Formulierungen erfolgt durch Einmischen der Zusätze vor dem eventuell vorzunehmenden Aushärtungs- bzw. Vernetzungsprozeß bei Temperaturen unter 120 °C. Bei Mehrkomponentensystemen können eine und/oder beide Komponenten die erfindungsgemäßen Zusätze enthalten, wobei naturgemäß je nach System oder Zusatzkomponente die Verträglichkeit bzw. Lagerfähigkeit zu testen ist. Letzteres gilt auch für die mit Atmosphärilien vernetzenden Einkomponentensysteme.

Die erfindungsgemäßen Silicon-Formmassen bzw. - kittmassen können als Formkörper, Folien und Beschichtungen Verwendung finden oder auch als Fugenfüllungen und Abschottungsmaterialien; im Falle geschäumter Produkte auch relativ preiswert bei Hohlraumausfüllungen. Im Brandfalle entsteht durch das Intumeszenzverhalten und die reduzierte Entflammbarkeit eine Isolier- und Schutzfunktion gegen die Fortleitung von Bränden durch die mit den neuartigen Siliconmassen geschützten Bauteile, etwa Kabeldurchbrüche durch Brandwände, Kabeltrassen, Fugenabdichtungen an Wandelementen, Ventilschutzkästen, Absperrvorrichtungen, die bei Erhitzung Rohre oder Schächte via Intumeszenz verschließen, sei es durch Zusammenpressen oder Ausfüllen usw.

Im folgenden werden die Prüf- und Testverfahren, die bei der Beurteilung der Intumeszenz-Wirkung herangezogen wurden beschrieben.

Brandteste und Beurteilungen:

Aus den Siliconmassen wird ein Rundstrang von 5 mm ø hergestellt und nach dem eventuellen Aushärten auf eine Maschendrahtrinne gelegt. Das Prüfmuster ragt 1 cm über die Maschendrahtrinne (Maschendurchmesser ca. 2 mm) hinaus. Dann wird die entleuchtete Flamme eines Erdgas-Bunsenbrenners so unter das Muster gebracht, daß sich der blaue Flammenkegel 3 mm unter der Stelle befindet, wo sich die Grenze zwischen Drahtgeflecht und freitragendem Teil des Musters befindet. Nach 60 sec. Beflammung wird die Flamme gelöscht und das Nachbrennen beobachtet:

| Urteil | Benotung | | Intumeszenz | |
|---|---|---|---|---|
| kein Nachbrennen | 1 | 1 | über 300 | Vol % |
| Nachbrennen bis 3 sek. | 2 | 2 | 200 - 300 | " |
| " " 10 sek. | 3 | 3 | 100 - 200 | " |
| " über 10 sek. | 4 | 4 | 0 - 100 | " |

Dann wird nach 30 sek. die Brennerflamme wieder gezündet und für weitere 180 sek. das Muster beflammt.

Nach der ersten und zweiten Zündung werden jeweils Intumeszenz und Nachbrennen beurteilt und benotet . Zur Intumeszenzbeurteilung wird die Querschnittszunahme über dem Flammenzentrum benutzt.

Die Fugenprüfung erfolgt in einer in Anlehnung an DIN 4102 betriebenen nach der ETK aufgeheizten Kleinbrandkammer an mit dem Siliconmaterial gefüllten Fugen zwischen zwei Schaumbetonteilen. Die Fuge hat eine Breite von 1,5 cm und eine Tiefe von 3 cm. Es wird die Zeit bestimmt, die vergeht, bis entweder die Fuge einen Brandgasdurchtritt aus der Brandkammer zuläßt oder eine Temperatur von über 150 °C auf der feuerabgewandten Seite aufweist. Die ermittelte Zeit wird als die Versagenszeit bezeichnet.

Die vorliegende Erfindung soll anhand der folgenden Test-Beispiele näher erläutert werden (%-Angaben sind Gewichts-%):

Beispiel 1 (zum Vergleich)

Eine handelsübliche, luftfeuchtigkeitsvernetzende Polysiloxanformmasse (1K-System) gemäß DE-PS 12 58 087, Beispiel 3, ohne erfindungsgemäße Zusätze.

Beispiel 2 (zum Vergleich)

Polysiloxanmasse gemäß Beispiel 1, jedoch mit zusätzlich 50 Gew.-% (bezogen auf die Formmasse) Ethylendiaminphosphat (Korngröße unter 0,1 mm Durchmesser)

Beispiel 3

Gemäß Beispiel 1 mit 35 % Ethylendiaminphosphat sowie 15 % nitrosierter Ceylongraphit (N-Gehalt ca. 1,5 %).

Beispiel 4

Gemäß Beispiel 3 mit zusätzlich 10 % (jeweils auf Polysiloxanmasse) Dimethyl-methylphosphonat.

Beispiel 5

Paste bestehend aus hochmolekularem Polydimethylsiloxan (Penetrometerwert (nach Klein) 150) mit 12 % pyrogener Kieselsäure. Zusatz von 30 % Ethylendiaminphosphat und 20 % Graphitverbindung gemäß Beispiel 3.

Beispiel 6 (zum Vergleich)

Polysiloxanmasse gemäß Beispiel 1, jedoch mit 7,5% Graphit gemäß Beispiel 3 und 22,5% Melaminphosphat.

Beispiel 7 (zum Vergleich)

Wie Beispiel 6, jedoch anstelle von Melaminphosphat Ammonium polyphosphat.

Beispiel 8

Polysiloxanmasse gemaß Beispiel 1, jedoch mit 7,5 % Graphit gemäß Beispiel 3 und 22,5 % Ethylendiaminphosphat.

Beispiel 9

Handelsübliches Schaumsystem (2-komponentig, "Fire Stop" der Fa. Dow Corning, USA) wird gemischt und nach dem Vermischen werden 15 % Graphit aus Beispiel 3 und 10 % Ethylendiaminphosphat zungesetzt und verrührt. Diese Mischung wird in ein Polyethylenrohr mit 5 mm ⌀ innen gegossen, indem sie zu einem Rundstrang mit Raumgewicht von ca. 0,5 g/cm³ aufschäumt. Frei geschäumte Mischungen erreichten Raumgewichte unter 0,3 g/cm³.

Beispiel 10 (zum Vergleich)

Wie 9, jedoch ohne Phosphatzusatz.

Beispiel 11 (zum Vergleich)

Wie 3, jedoch ohne Phosphatzusatz.

Beispiel 12

Eine handelsübliche Polysiloxanformmasse (1K-System) gemäß DE-PS 12 58 087, Beispiel 3, mit Zusätzen wie in Beispiel 4 beschrieben.

| Beispiel | 1. Nachbrennen | 1. Intumeszenz | 2. Nachbrennen | 2. Intumeszenz | Versagenszeit (min.) |
|---|---|---|---|---|---|
| 1 x) | 4 | 4 | 4 | 4 | 21 |
| 11 x) | 2 | 2 | 2 | 1 | 40 |
| 2 x) | 2 | 3 – 4 | 2 | 3 | 48 |
| 3 | 1 | 2 | 1 | 1 – 2 | 82 |
| 4 | 1 | 1 – 2 | 1 | 1 – 2 | 69 |
| 5 | 2 | 3 | 1 – 2 | 1 | 58 |
| 6 x) | 3 | 3 | 3 | 2 | 54 |
| 7 x) | 2 | 3 | 3 | 2 – 3 | 59 |
| 8 | 2 | 3 | 2 | 2 | 73 |
| 9 | 1 | 2 – 3 | 1 – 2 | 2 | 128 |
| 10 x) | 1 | 3 | 1 – 2 | 2 | 100 |
| 12 | 1 | 1 | 1 – 2 | 1 – 2 | 74 |

x) zum Vergleich

## Patentansprüche

1. Polysiloxan-Formmassen, gekennzeichnet durch einen Gehalt an blähfähigen Graphitverbindungen und Ethylendiaminphosphaten.

**2.** Formmassen gemäß Anspruch 1, dadurch gekennzeichnet, daß diese zusätzlich Phosphorsäure-und/oder Phosphonsäureester enthalten.

**Claims**

**1.** Polysiloxane moulding compositions, characterised in that they contain expandable graphite compounds and ethylene diamine phosphates.

**2.** Moulding compositions according to Claim 1, characterised in that these additionally contain phosphoric acid esters and/or phosphonic acid esters.

**Revendications**

**1.** Masses moulables en polysiloxane, caractérisées en ce qu'elles contiennent des composés de graphite capables de gonfler et des éthylènediaminephosphates.

**2.** Masses moulables selon la revendication 1, caractérisées en ce qu'elles contiennent, en plus, des esters d'acides phosphoriques et/ou d'acides phosphoniques.